# EUROPEAN PATENT APPLICATION

(11) **EP 4 277 136 A1**
(43) Date of publication of application: **15.11.2023**
(21) Application number: 21916733.5
(22) Date of filing: 06.01.2021
(51) Int. Cl.: H04B 1/3827

(54) **METHOD AND APPARATUS FOR DETERMINING UPLINK ANTENNA PANEL, AND COMMUNICATION DEVICE**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2021/070406
(87) International publication number: WO 2022/147675

(57) **Abstract**

Provided are a method and apparatus for determining an uplink antenna panel, and a communication device, which relate to the terminal field of mobile communications. The solution involves: sending a first indication message to a network device, wherein the first indication message is used for indicating the state of at least one uplink antenna panel and/or at least one uplink beam of a UE. Therefore, according to a first indication message, a network device can determine an uplink antenna panel and/or an uplink beam used by a UE, or select an uplink antenna panel and/or an uplink beam for the UE, thereby improving the uplink throughput of the UE.

## Description

### TECHNICAL FIELD

The disclosure relates to a field of mobile communication technologies, and in particular, relates to methods and apparatus for determining an uplink antenna panel and communication devices.

### BACKGROUND

In order to meet requirements of the extremely high-speed short-distance communication and the transmission rate, mobile communication systems can use high-frequency frequency bands (such as frequency bands greater than or equal to 6 GHz) to transmit signals to relieve the shortage of spectrum resources.

Since high-frequency channels attenuate quickly, beam-based transmission and reception can be used to ensure coverage. For example, a user equipment (UE) and a network device can perform data transmission through beam alignment.

The UE may include multiple antenna panels, to cover multiple different directions. For the UE with multiple antenna panels, how to select the most suitable uplink antenna panel for the UE is an urgent problem to be solved.

### SUMMARY

A first aspect of embodiments of the disclosure provides a method for determining an uplink antenna panel performed by a user equipment (UE). The method includes:
sending a first indication message to a network device, in which the first indication message is configured to indicate a state of at least one uplink antenna panel and/or a state of at least one uplink beam of the UE.

A second aspect of embodiments of the disclosure provides a method for determining an uplink antenna panel performed by a network device. The method includes:
receiving a first indication message sent by a user equipment (UE), in which the first indication message is configured to indicate a states of at least one uplink antenna panel and/or a state of at least one uplink beam of the UE.

A third aspect of embodiments of the disclosure provides an apparatus for determining an uplink antenna panel applied to a user equipment (UE). The apparatus includes:
a sending module, configured to send a first indication message to a network device, in which the first indication message is configured to indicate a state of at least one uplink antenna panel and/or a state of at least one uplink beam of the UE.

A fourth aspect of embodiments of the disclosure provides an apparatus for determining an uplink antenna panel applied to a network device. The apparatus includes:
a receiving module, configured to receive a first indication message sent by a user equipment (UE), in which the first indication message is configured to indicate a states of at least one uplink antenna panel and/or a state of at least one uplink beam of the UE.

A fifth aspect of embodiments of the disclosure provides a system for determining an uplink antenna panel. The system includes a UE and a network device. The UE is configured to perform the method according to the first aspect of embodiments, and the network device is configured to perform the method according to the second aspect of embodiments.

A sixth aspect of embodiments of the disclosure provides a communication device. The communication device includes a transceiver; a memory; and a processor connected to the transceiver and the memory. The processor is configured to control a wireless signal transmission and reception of the transceiver and perform a method according to the first aspect of embodiments by executing computer-executable instructions stored on the memory.

A seventh aspect of embodiments of the disclosure provides a communication device. The communication device includes a transceiver; a memory; and a processor connected to the transceiver and the memory. The processor is configured to control a wireless signal transmission and reception of the transceiver and perform a method according to the second aspect of embodiments by executing computer-executable instructions stored on the memory.

An eighth aspect of embodiments of the disclosure provide a computer storage medium having computer-executable instructions stored thereon. After the computer-executable instructions are executed by a processor, a method according to the first aspect of embodiments is performed.

A ninth aspect of embodiments of the disclosure provide a computer storage medium having computer-executable instructions stored thereon. After the computer-executable instructions are executed by a processor, a method according to the second aspect of embodiments is performed.

A tenth aspect of embodiments of the disclosure provides a computer program product including a computer program. When the computer program is executed by a processor in a communication device, a method according to the first aspect of embodiments of the disclosure is performed.

An eleventh aspect of embodiments of the disclosure provides a computer program product including a computer program. When the computer program is executed by a processor in a communication device, a method according to the second aspect of embodiments of the disclosure is performed.

A twelfth aspect of embodiments of the disclosure provide a computer program. When the computer program is executed by a processor, a method according to the first aspect of embodiments is performed.

A thirteenth aspect of embodiments of the disclosure provide a computer program. When the computer program is executed by a processor, a method according to the second aspect of embodiments is performed.

With the methods, the apparatuses, and the communication devices for determining an uplink antenna panel according to embodiments of the disclosure, the first indication message is sent to the network device. The first indication message is configured to indicate the state of at least one uplink antenna panel and/or the state of at least one uplink beam of the UE. Therefore, the network device determines the uplink antenna panel and/or the uplink beam used by the UE or selects the uplink antenna panel and/or the uplink beam for the UE based on the first indication message. The uplink throughput of the UE is improved.

Additional aspects and advantages of the disclosure will be set forth, in part, from the following description, and in part will be apparent from the following description, or may be learned by practice of the disclosure.

### BRIEF DESCRIPTION OF THE DRAWINGS

The above and/or additional aspects and advantages of the disclosure will become apparent and readily understood from the following description of embodiments taken in conjunction with the accompanying drawings.
FIG. 1 is a schematic flowchart illustrating a method for determining an uplink antenna panel according to an embodiment of the disclosure.
FIG. 2 is a schematic flowchart illustrating another method for determining an uplink antenna panel according to an embodiment of the disclosure.
FIG. 3 is a schematic flowchart illustrating another method for determining an uplink antenna panel according to an embodiment of the disclosure.
FIG. 4 is a schematic flowchart illustrating another method for determining an uplink antenna panel according to an embodiment of the disclosure.
FIG. 5 is a schematic flowchart illustrating another method for determining an uplink antenna panel according to an embodiment of the disclosure.
FIG. 6 is a schematic flowchart illustrating another method for determining an uplink antenna panel according to an embodiment of the disclosure.
FIG. 7 is a schematic flowchart illustrating another method for determining an uplink antenna panel according to an embodiment of the disclosure.
FIG. 8 is a schematic block diagram illustrating an apparatus for determining an uplink antenna panel according to an embodiment of the disclosure.
FIG. 9 is a schematic block diagram illustrating another apparatus for determining an uplink antenna panel according to an embodiment of the disclosure.
FIG. 10 is a schematic block diagram illustrating another apparatus for determining an uplink antenna panel according to an embodiment of the disclosure.
FIG. 11 is a schematic block diagram illustrating an apparatus for determining an uplink antenna panel according to an embodiment of the disclosure.
FIG. 12 is a schematic block diagram illustrating another apparatus for determining an uplink antenna panel according to an embodiment of the disclosure.
FIG. 13 is a block diagram illustrating a communication device for performing a method for determining an uplink antenna panel according to an embodiment of the disclosure.

### DETAILED DESCRIPTION

Embodiments of the disclosure will be described in detail below, examples of which are illustrated in the accompanying drawings, in which the same or similar reference numerals refer to the same or similar elements or elements having the same or similar functions throughout. The embodiments described below with reference to the accompanying drawings are examples, and are intended to explain the disclosure and should not be construed as a limitation of the disclosure.

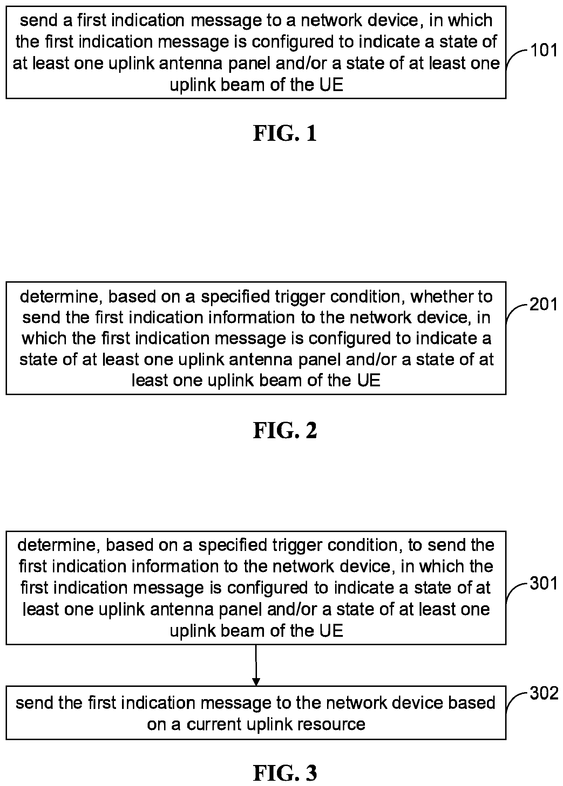

FIG. 1 is a schematic flowchart illustrating a method for determining an uplink antenna panel according to an embodiment of the disclosure. The method may be performed by a user equipment (UE). As illustrated in FIG. 1, the method for determining the uplink antenna panel includes the following.

At step 101, a first indication message is sent to a network device. The first indication message is configured to indicate a state of at least one uplink antenna panel and/or a state of at least one uplink beam of the UE.

In the disclosure, the UE may include multiple antenna panels. Each antenna panel may include one or more beams. After selecting an uplink antenna panel and/or an uplink beam, the UE may send the first indication message to the network device to notify the network device of the uplink antenna panel and/or the uplink beam selected by the UE. Or, the UE sends the first indication message to the network device, such that the network device selects a suitable uplink antenna panel and/or a suitable uplink beam for the UE based on the first indication message.

The first indication message may be configured to indicate the state(s) of the at least one uplink antenna panel, the state(s) of the at least one uplink beam, or the state(s) of at least one uplink antenna panel and the state(s) of at least one uplink beam of the UE. For example, the first indication message may include a respective uplink power value corresponding to each uplink antenna panel, a respective uplink power value corresponding to each uplink beam, or the others. The uplink power value may be a maximum transmission power value under the influence of maximum permissible exposure (MPE) or a power value that needs to be reduced under the influence of the MPE. Thus, the network device selects a suitable uplink antenna panel and/or a suitable uplink beam for the UE based on the first indication message, which can improve the uplink throughput of the UE.

In the disclosure, the network device may be a base station. For example, the base station involved in the disclosure may be a Base Transceiver Station (BTS) in a Global System for Mobile Communications (GSM) or a Code Division Multiple Access (CDMA), a base station (also called NodeB) in a Wide-band Code Division Multiple Access (WCDMA), an evolutional NodeB (also called eNB or e-NodeB) in a Long Term evolution (LTE) system, a 5G base station (also called gNB) in a 5G network architecture (e.g., a next generation system), a Home evolved Node B (HeNB), a relay node, a femto, a pico, or the others, which is not limited in the disclosure.

With the method for determining an uplink antenna panel according to embodiments of the disclosure, the first indication message is sent to the network device. The first indication message is configured to indicate the state(s) of at least one uplink antenna panel and/or the state(s) of at least one uplink beam of the UE. Therefore, the network device determines the uplink antenna panel and/or the uplink beam used by the UE or selects the uplink antenna panel and/or the uplink beam for the UE based on the first indication message. The uplink throughput of the UE is improved.

FIG. 2 is a schematic flowchart illustrating a method for determining an uplink antenna panel according to an embodiment of the disclosure. The method is performed by a UE. As illustrated in FIG. 2, the method includes the following.

At step 201, it is determined based on a specified trigger condition, whether to send a first indication message to the network device. The first indication message is configured to indicate state(s) of at least one uplink antenna panel and/or state(s) of at least one uplink beam of the UE.

In the disclosure, the UE may include multiple antenna panels. Each antenna panel may include one or more beams. The UE may determine, based on the specified trigger condition, whether to send the first indication message to the network device.

The first indication message may be configured to indicate the states(s) of the at least one uplink antenna panel of the UE, the state(s) of the at least one uplink beam of the UE, or the state(s) of the at least one uplink antenna panel and the state(s) of the at least one uplink beam of the UE. For example, the first indication message may include a respective uplink power value corresponding to each uplink antenna panel, a respective uplink power value corresponding to each uplink beam, and the others. The uplink power value may be a maximum transmission power value under the influence of the MPE, or a power value that needs to be reduced under the influence of the MPE.

In the disclosure, the network device may be a base station For example, the base station involved in the disclosure may be a BTS in the GSM or the CDMA, a base station (also called NodeB) in the WCDMA, an evolutional NodeB (also called eNB or e-NodeB) in the LTE system, a 5G base station (also called gNB) in a 5G network architecture (e.g., a next generation system), a HeNB, a relay node, a femto, a pico, or the others, which is not limited in the disclosure.

In the disclosure, the trigger condition may be specified as required. For example, the trigger condition is that the MPE is exceeded, an uplink interference is greater than a first specified value, or the like.

The UE may send the first indication message to the network device in response to determining that the specified trigger condition is satisfied, or not send the first indication message to the network device in response to determining that the specified trigger condition is not satisfied. Therefore, the UE can send the first indication message to the network device in a targeted manner.

In the disclosure, the UE can select the uplink antenna panel and/or the uplink beam by itself, and notify, through the first indication message, the network device of the uplink antenna panel and/or the uplink beam used by the UE. Or, the UE sends the first indication message to the network device, such that the network device selects the uplink antenna panel and/or the uplink beam for the UE based on the first indication message.

With the method for determining an uplink antenna panel according to embodiments of the disclosure, it is determined, based on the specified trigger condition, whether to send the first indication message to the network device. The first indication message is configured to indicate the state(s) of at least one uplink antenna panel and/or the state(s) of at least one uplink antenna panel of the UE. Therefore, the network device determines the uplink antenna panel and/or the uplink beam used by the UE based on the first indication message or selects the uplink antenna panel and/or the uplink beam for the UE. The uplink throughput of the UE is improved.

FIG. 3 is a schematic flowchart illustrating another method for determining an uplink antenna panel according to an embodiment of the disclosure. The method is performed by the UE. As illustrated in FIG. 3, the method includes the following.

At step 301, it is determined, based on the specified trigger condition, to send a first indication message to the network device. The first indication message is configured to indicate state(s) of at least one uplink antenna panel and/or state(s) of at least one uplink beam of the UE.

In the disclosure, the specified trigger condition may be one of following conditions that: the MPE is exceeded, an uplink interference is greater than a first specified value, a remaining power is less than a second specified value, parameters of different antenna panels are different, or a communication transmission is performed with multiple transmission and reception points in the network device.

In other words, if the specified trigger condition is that the MPE is exceeded (e.g., the trigger condition being exceeding the MPE includes that the MPE is exceeded for an uplink antenna panel or the MPE is exceeded for an uplink beam of an uplink antenna panel), in response to determining that the MPE is exceeded, the UE may determine to send the first indication message to the network device. If the specified trigger condition is that the uplink interference is greater than the first specified value (e.g., the trigger condition being that the uplink interference is greater than the first specified value includes that the uplink interference of an uplink antenna panel is greater than the first specified value or the uplink interference of an uplink beam of an uplink antenna panel is greater than the first specified value), when the uplink interference is greater than the first specified value (that is the uplink interference is relatively large), the UE may determine to send the first indication message to the network device. If the specified trigger condition is that the remaining power is less than the second specified value, when the remaining power is less than the second specified value, the UE may determine to send the first indication message to the network device for saving power. If the specified trigger condition is that the parameters of different antenna panels are different, when the parameters of different antenna panels are different, the UE can determine, based on its current amount of services and/or its current channel condition as well as respective parameter configurations of the antenna panels, to send the first indication message to the network device. If the specified trigger condition is that the communication transmission is performed with multiple transmission and reception points in the network device, when the communication and transmission performed with the multiple transmission and reception points in the network device is needed, the UE may determine to send the first indication message to the network device.

The first indication message sent by the UE to the network device may include at least one of following: a specified trigger condition, a first specified type of uplink antenna panel identifier(s), a first specified type of uplink beam identifier(s), a second specified type of uplink antenna panel identifier(s), a second specified type of uplink beam identifier(s), a respective measurement value corresponding to each uplink antenna panel identifier, a respective parameter corresponding to each uplink antenna panel identifier, a respective measurement value corresponding to each uplink beam identifier, or a respective parameter corresponding to each uplink beam identifier.

The "first specified type of" may be used to indicate "recommended", and the "second specified type of" may be used to indicate "not recommended". In other words, the first specified type of uplink antenna panel identifier(s) may be uplink antenna panel identifier(s) recommended by the UE or uplink antenna panel identifier(s) corresponding to uplink antenna panel(s) determined to be used by the UE, and the second specified type of uplink antenna panel identifier(s) may be uplink antenna panel identifier(s) that are not recommended by the UE. That is, the first indication message sent by the UE to the network device may include at least one of recommended uplink antenna panel identifier(s), recommended uplink beam identifier(s), uplink antenna panel identifier(s) that are not recommended, or uplink beam identifier(s) that are not recommended.

In the disclosure, the respective measurement value corresponding to each uplink antenna panel identifier may be a respective uplink power value of each uplink antenna panel. The respective measurement values corresponding to each uplink beam identifier may be at least one of a Layer 1 Reference Signal Received Power (L1-RSRP), a Layer 1 Signal to Interference plus Noise Ratio (L1-SINR), or an uplink power value. The uplink power value may be a maximum transmission power value under the influence of the MPE or a power value that needs to be reduced under the influence of the MPE.

The respective parameter corresponding to each uplink antenna panel identifier can be a respective parameter of each uplink antenna panel. For example, the parameter of an uplink antenna panel may be at least one of: the number of transmit and/or receive antennas supported by the antenna panel, the number of antenna ports supported by the antenna panel, or the number of transmitting and/or receiving beams supported by the antenna panel. The respective parameter corresponding to each uplink beam identifier can be a respective parameter of each uplink beam. For example, the parameter of an uplink beam is a transmission configuration indication (TCI) state identifier corresponding to the uplink beam or a spatial relationship information identifier (SpatialRelationInfo) corresponding to the uplink beam.

The above-mentioned "uplink antenna panel identifier" or "uplink beam identifier" may be at least one of following identifiers: a specified identifier, an identifier of a corresponding reference signal set, or an identifier of a corresponding reference signal. The specified identifier may be at least one of following: an antenna panel identifier, a TCI state identifier, or a spatial relationship information identifier. The reference signal may be one of following signals: an uplink sounding reference signal (SRS), a downlink channel state information reference signal (CSI-RS), a downlink synchronization signal block (SSB), or a downlink positioning reference signal (PRS).

At step 302, the first indication message is sent to the network device based on a current uplink resource.

In the disclosure, if the network device allocates an uplink resource to the UE, the UE may send the first indication message to the network device based on the current uplink resource. The uplink resource may be a Physical Uplink Shared Channel (PUSCH).

The first indication message may be an uplink power reporting signaling for sending power value(s) of the at least one uplink antenna panel or power value(s) of the at least one uplink beam of the UE, a beam measurement result reporting signaling for sending uplink power value(s) and/or measurement value(s) of the at least one uplink beam of the UE, a CSI measurement result reporting signaling corresponding to the at least one uplink antenna panel or the at least one uplink beam of the UE, an antenna panel capability reporting signaling for sending the number of uplink antenna panels of the UE, the number of ports supported by each uplink antenna panel and/or the number of beams supported by each uplink antenna panel, a scheduling request, wherein a beam used by the scheduling request is a beam corresponding to the at least one uplink antenna panel of the UE, or a random access request (also called Random Access) message, wherein a beam used by the random access request message for sending a preamble is a beam corresponding to the at least one uplink antenna panel in the UE.

It is understandable that the UE may send the first indication message to the network device based on the current uplink resource. An understanding is as follows: the recommended uplink antenna panel identifier(s) and/or the recommended uplink beam identifier(s) included in the first indication information are only recommended by the UE, and the network device may select an uplink antenna panel identifier and/or an uplink beam identifier for the UE to finally use based on the recommended uplink antenna panel identifier(s) and/or the recommended uplink beam identifier(s) and indicate them to the UE. The uplink antenna panel identifier and/or the uplink beam identifier selected by the network device for the UE to finally use may be the same as or different from any one of the recommended uplink antenna panel identifier(s) and/or the recommended uplink beam identifier(s) included in the first indication information. Another understanding is as follows: the recommended uplink antenna panel identifier(s) and/or the recommended uplink beam identifier(s) included in the first indication information are determined by the UE itself, and sending the first indication information by the UE is only to inform the network equipment that the uplink antenna panel identifier and/or the uplink beam identifier to be used by UE are the recommended uplink antenna panel identifier(s) and/or the recommended uplink beam identifier(s) included in the first identification message. Therefore, the network device does not need to select the recommended identifier(s) for the UE or sends an indication to the UE.

It is understandable that, if the first indication message is a scheduling request, the network device can know that the UE has selected a beam by itself upon receiving the scheduling request, and the network device does not need to select the uplink antenna panel and/or the uplink beam for the UE. The UE can communicate with the network device using a beam used by the UE for sending the scheduling request. If the first indication message is a random access request message, the network device does not need to select an uplink antenna panel and/or an uplink beam for the UE, and the UE can communicate with the network device based on a beam used by the random access request message for sending a preamble.

With the method for determining an uplink antenna panel according to embodiments of the disclosure, it is determined, based on the specified trigger condition, to send the first indication message to the network device and the first indication message is sent to the network device through the current uplink resource. Therefore, the network device can determine the uplink antenna panel and/or the uplink beam used by the UE or select the uplink antenna panel and/or the uplink beam for the UE based on the first indication message. The uplink throughput of the UE is improved.

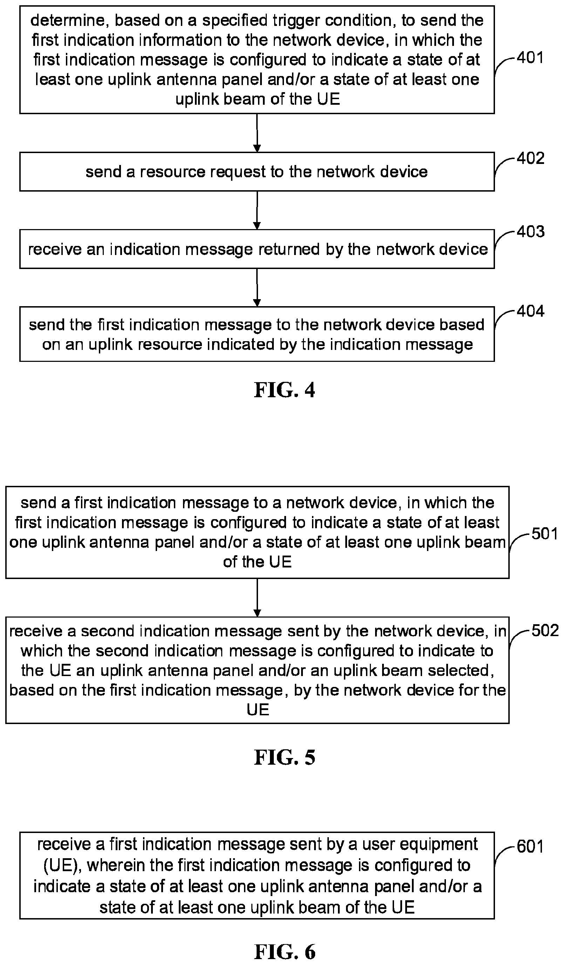

FIG. 4 is a schematic flowchart illustrating another method for determining an uplink antenna panel according to embodiments of the disclosure. The method is performed by the UE. As illustrated in FIG. 4, the method includes the following.

At step 401, it is determined, based on a specified trigger condition, to send a first indication message to the network device. The first indication message is configured to indicate state(s) of at least one uplink antenna panel and/or state(s) of at least one uplink beam of the UE.

In the disclosure, the step 401 may be implemented in any of the various embodiments of the disclosure, which is not limited in the embodiments of the disclosure and will not be described again.

At step 402, a resource request is sent to the network device.

If the network device does not allocate any uplink resources to the UE, the UE may send the resource request to the network device to request the network device to allocate uplink resources. The resource request may be a scheduling request or a random access request.

At step 403, an indication message returned by the network device is received.

In the disclosure, after receiving the resource request sent by the UE, the network device can return an indication message to the UE, and then the UE can receive the indication message returned by the network device. The indication message may include an indication of an uplink resource used by the UE, such as PUSCH.

At step 44, the first indication message is sent to the network device based on the uplink resource indicated by the indication message.

The UE may send the first indication message to the network device by using the uplink resource indicated by the indication message.

In the disclosure, the step 404 may be implemented in any of the various embodiments of the disclosure, which is not limited in the embodiments of the disclosure and will not be described again.

With the method for determining an uplink antenna panel according to embodiments of the disclosure, it is determined, based on the specified trigger condition, to send the first indication message to the network device, the resource request is sent to the network device, and the first indication message is sent to the network device using the uplink resource indicated by the indication message returned by the network device. Therefore, the network device can determine the uplink antenna panel and/or the uplink beam used by the UE based on the first indication message or select the uplink antenna panel and/or the uplink beam for the UE.

FIG. 5 is a schematic flowchart illustrating another method for determining an uplink antenna panel according to embodiments of the disclosure. The method is performed by the UE. As illustrated in FIG. 5, the method includes the following.

At step 501, a first indication message is sent to a network device. The first indication message is configured to indicate state(s) of at least one uplink antenna panel and/or state(s) of at least one uplink beam of the UE.

In the disclosure, the step 501 may be implemented in any one of the various embodiments of the disclosure, which is not limited in the embodiments of the disclosure and will not be described again.

At step 502, a second indication message sent by the network device is received. The second indication message is configured to indicate to the UE an uplink antenna panel and/or an uplink beam selected based on the first indication message by the network device for the UE.

The network device may select an uplink antenna panel and/or an uplink beam for the UE according to the received first indication message sent by the UE, and send the second indication message to the UE. The UE can receive the second indication message sent by the network device.

The second indication message is configured to indicate to the UE the uplink antenna panel and/or the uplink beam selected based on the first indication message for the UE by the network device. The second indication message may include identifier(s) of the uplink antenna panel and/or the uplink beam selected for the UE. The UE can know, based on the second instruction message, the uplink antenna panel and/or the uplink beam selected by the network device, and the UE can use the uplink antenna panel and/or uplink beam selected by the network device to communicate with the network device. The uplink throughput of the UE is improved.

With the method for determining an uplink antenna panel according to embodiments of the disclosure, by sending the first indication message to the network device and receiving the second indication message sent by the network device, the UE can determine, based on the second indication message, the uplink antenna panel and/or the uplink beam selected by the network device for the UE. The uplink throughput of the UE is improved.

FIG. 6 is a schematic flowchart illustrating another method for determining an uplink antenna panel according to an embodiment of the disclosure. The method is performed by a network device. As illustrated in FIG. 6, the method includes the following.

At step 601, a first indication message sent by the UE. The first indication message is configured to indicate state(s) of at least one uplink antenna panel and/or state(s) of at least one uplink beam of the UE.

In the disclosure, the UE may include multiple antenna panels. Each antenna panel includes one or more beams. When the UE determines, based on a specified trigger condition, to send the first indication message to the network device and sends the first indication message to the network device, the network device may receive the first indication message sent by the UE.

The first indication message is configured to indicate state(s) of at least one uplink antenna panel, state(s) of at least one uplink beam, or the state(s) of at least one uplink antenna panel and the state(s) of at least one uplink beam of the UE. For example, the first indication message may include a respective uplink power value corresponding to each uplink antenna panel, a respective uplink power value corresponding to each uplink beam, or the like. The uplink power value may be a maximum transmission power value under the influence of the MPE, or a power value that needs to be reduced under the influence of the MPE.

In the disclosure, the UE can select an uplink antenna panel and/or an uplink beam by itself, and notify the network device through the first indication message. The network device can know the uplink antenna panel and/or the uplink beam selected by the UE based on the received first indication message. Or, the network device may select an uplink antenna panel and/or an uplink beam for the UE based on the first indication message.

With the method for determining an uplink antenna panel according to embodiments of the present disclosure, by receiving the first indication message sent by the UE, the network device can know the uplink antenna panel and/or the uplink beam selected by the UE based on the received first indication message or select an uplink antenna panel and/or an uplink beam for the UE based on the first indication message. The uplink throughput of the UE is improved.

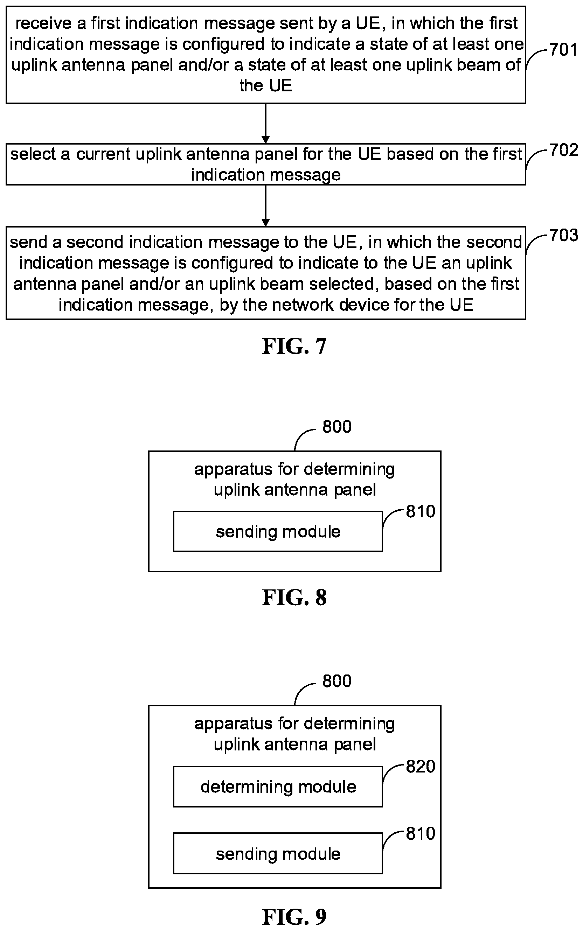

FIG. 7 is a schematic flowchart illustrating another method for determining an uplink antenna panel according to an embodiment of the disclosure. The method is performed by a network device. As illustrated in FIG. 7, the method includes the following.

At step 701, a first indication message sent by a UE is received. The first indication message is configured to indicate state(s) of at least one uplink antenna panel and/or state(s) of at least one uplink beam of the UE.

In the disclosure, the first indication message may include at least one of following information: a specified trigger condition, a first specified type of uplink antenna panel identifier, a first specified type of uplink beam identifier, a second specified type of uplink antenna panel identifier, a second specified type of uplink beam identifier, a respective measurement value corresponding to each uplink antenna panel identifier, a respective parameter corresponding to each uplink antenna panel identifier, a respective measurement value corresponding to each uplink beam identifier, or a respective parameter corresponding to each uplink beam identifier.

The UE determines whether to send the first indication message to the network device based on the specified trigger condition. The specified trigger condition may be one of following conditions that: an MPE is exceeded, an uplink interference is greater than a first specified value, a remaining power is less than a second specified value, parameters of different antenna panels are different, a communication transmission is performed with multiple transmission and reception points in the network device.

In other words, if the specified trigger condition is that the MPE is exceeded (e.g., the trigger condition being exceeding the MPE includes that the MPE is exceeded for an uplink antenna panel or the MPE is exceeded for an uplink beam of an uplink antenna panel), in response to determining that the MPE is exceeded, the UE may determine to send the first indication message to the network device. If the specified trigger condition is that the uplink interference is greater than the first specified value (e.g., the trigger condition being that the uplink interference is greater than the first specified value includes that the uplink interference of an uplink antenna panel is greater than the first specified value or the uplink interference of an uplink beam of an uplink antenna panel is greater than the first specified value), when the uplink interference is greater than the first specified value (that is the uplink interference is relatively large), the UE may determine to send the first indication message to the network device. If the specified trigger condition is that the remaining power is less than the second specified value, when the remaining power is less than the second specified value, the UE may determine to send the first indication message to the network device for saving power. If the specified trigger condition is that the parameters of different antenna panels are different, when the parameters of different antenna panels are different, the UE can determine, based on its current amount of services and/or its current channel condition as well as respective parameter configurations of the antenna panels, to send the first indication message to the network device. If the specified trigger condition is that the communication transmission is performed with multiple transmission and reception points in the network device, when the communication and transmission performed with the multiple transmission and reception points in the network device is needed, the UE may determine to send the first indication message to the network device.

The "first specified type of" included in the first indication message may be used to indicate "recommended", and the "second specified type of" may be used to indicate "not recommended". In other words, the first specified type of uplink antenna panel identifier may be uplink antenna panel identifier(s) recommended by the UE or uplink antenna panel identifier(s) corresponding to uplink antenna panel(s) determined to be used by the UE, and the second specified type of uplink antenna panel identifier may be uplink antenna panel identifier(s) that are not recommended by the UE. That is, the first indication message received by the network device may include at least one of recommended uplink antenna panel identifier(s), recommended uplink beam identifier(s), uplink antenna panel identifier(s) that are not recommended, or uplink beam identifier(s) that are not recommended.

In the disclosure, the respective measurement value corresponding to each uplink antenna panel identifier may be a respective uplink power value of each uplink antenna panel. The respective measurement values corresponding to each uplink beam identifier may be at least one of a L1-RSRP, a L1-SINR, or an uplink power value. The uplink power value may be a maximum transmission power value under the influence of the MPE or a power value that needs to be reduced under the influence of the MPE.

The respective parameter corresponding to each uplink antenna panel identifier can be a respective parameter of each uplink antenna panel. For example, the parameter of an uplink antenna panel may be at least one of: the number of transmit and/or receive antennas supported by the antenna panel, the number of antenna ports supported by the antenna panel, or the number of transmitting and/or receiving beams supported by the antenna panel. The respective parameter corresponding to each uplink beam identifier can be a respective parameter of each uplink beam. For example, the parameter of an uplink beam is a TCI state identifier corresponding to the uplink beam or a spatial relationship information identifier corresponding to the uplink beam.

The above-mentioned "uplink antenna panel identifier" or "uplink beam identifier" may be at least one of following identifiers: a specified identifier, an identifier of a corresponding reference signal set, or an identifier of a corresponding reference signal. The specified identifier may be at least one of following: an antenna panel identifier, a TCI state identifier, or a spatial relationship information identifier. The reference signal may be one of following signals: an uplink SRS, a downlink CSI-RS, a downlink SSB, or a downlink PRS.

The first indication message received by the network device may be an uplink power reporting signaling for sending power value(s) of the at least one uplink antenna panel or power value(s) the at least one uplink beam of the UE, a beam measurement result reporting signaling for sending uplink power value(s) and/or measurement value(s) of the at least one uplink beam of the UE, a CSI measurement result reporting signaling corresponding to the at least one uplink antenna panel or the at least one uplink beam of the UE, an antenna panel capability reporting signaling for sending the number of uplink antenna panels of the UE, the number of ports supported by each uplink antenna panel and/or the number of beams supported by each uplink antenna panel, a scheduling request, wherein a beam used by the scheduling request is a beam corresponding to the at least one uplink antenna panel of the UE, or a random access request (also called Random Access) message, wherein a beam used by the random access request message for sending a preamble is a beam corresponding to the at least one uplink antenna panel in the UE.

At step 702: a current uplink antenna panel and/or a current uplink beam are selected based on the first indication message for the UE.

The network device may select a current uplink antenna panel and/or a current uplink beam for the UE based on the first indication message.

For example, if the first indication message includes a first specified type of uplink antenna panel identifier(s) and a second specified type of uplink antenna panel identifier(s), the first specified type of uplink antenna panel identifier(s) indicates recommended uplink antenna panel identifier(s) and the second specified type of uplink antenna panel identifier(s) indicates uplink antenna panel identifier(s) that are not recommended. The network device may select an uplink antenna panel from the first specified type of uplink antenna panels for the UE based on the first indication message.

It is understandable that the UE may send the first indication message to the network device based on the current uplink resource, and the network device receives the first indication message. An understanding is as follows: the recommended uplink antenna panel identifier(s) and/or the recommended uplink beam identifier(s) included in the first indication information are only recommended by the UE, and the network device may select an uplink antenna panel identifier and/or an uplink beam identifier for the UE to finally use based on the recommended uplink antenna panel identifier(s) and/or the recommended uplink beam identifier(s) and indicate them to the UE. The uplink antenna panel identifier and/or the uplink beam identifier selected by the network device for the UE to finally use may be the same as or different from any one of the recommended uplink antenna panel identifier(s) and/or the recommended uplink beam identifier(s) included in the first indication information. Another understanding is as follows: the recommended uplink antenna panel identifier(s) and/or the recommended uplink beam identifier(s) included in the first indication information are determined by the UE itself, and sending the first indication information by the UE is only to inform the network equipment that the uplink antenna panel identifier and/or the uplink beam identifier to be used by UE are the recommended uplink antenna panel identifier(s) and/or the recommended uplink beam identifier(s) included in the first identification message. Therefore, the network device does not need to select the recommended identifiers for the UE or sends an indication to the UE.

It is understandable that, if the first indication message is a scheduling request, the network device can know that the UE has selected a beam by itself upon receiving the scheduling request, and the network device does not need to select the uplink antenna panel and/or the uplink beam for the UE. The UE can communicate with the network device using a beam used by the UE for sending the scheduling request. If the first indication message is a random access request message, the network device does not need to select an uplink antenna panel and/or an uplink beam for the UE, and the UE can communicate with the network device based on a beam used by the random access request message for sending a preamble.

At step 703, a second indication message is sent to the UE. The second indication message is configured to indicate to the UE an uplink antenna panel and/or an uplink beam selected by the network device for the UE.

After selecting the current uplink antenna panel for the UE, the network device may send the second indication message to the UE. The second indication message may be configured to indicate to the UE an uplink antenna panel and/or an uplink beam selected by the network device for the UE or the second indication message may include identifier(s) of an uplink antenna panel and/or an uplink beam selected for the UE. The UE can know, based on the second indication information, the uplink antenna panel and/or the uplink beam selected by the network device, and the UE can use the uplink antenna panel and/or the uplink beam selected by the network device to communicate with the network device.

With the method for determining an uplink antenna panel according to embodiments of the disclosure, by receiving the first indication message sent by the UE, the current uplink antenna panel is selected for the UE based on the first indication message and the second indication message is sent to the UE, such that the network device can select a suitable uplink antenna panel and/or a suitable uplink beam for the UE based on the first indication message. The uplink throughput of the UE is improved.

FIG. 8 is a schematic block diagram illustrating an apparatus for determining an uplink antenna panel according to an embodiment of the disclosure. The apparatus is applied to a UE. As illustrated in FIG. FIG. 8, the apparatus 800 includes a sending module 810.

The sending module 810 is configured to send a first indication message to the network device. The first indication message is configured to indicate state(s) of at least one uplink antenna panel and/or state(s) of at least one uplink beam of the UE.

In some examples, the first indication message includes at least one of following information:
a specified trigger condition;
a first specified type of uplink antenna panel identifier(s);
a first specified type of uplink beam identifier(s);
a second specified type of uplink antenna panel identifier(s);
a second specified type of uplink beam identifier(s);
a respective measurement value corresponding to each uplink antenna panel identifier;
a respective parameter corresponding to each uplink antenna panel identifier;
a respective measurement value corresponding to each uplink beam identifier; or
a respective parameter corresponding to each uplink beam identifier.

In some examples, the uplink antenna panel identifier or the uplink beam identifier is at least one of following identifiers: a specified identifier, an identifier of a corresponding reference signal set, or an identifier of a corresponding reference signal.

In some examples, the specified identifier is at least one of following identifiers: an antenna panel identifier, a TCI state identifier, and a spatial relationship information identifier.

In some examples, the reference signal is one of following signals:
an uplink SRS;
a downlink CSI-RS;
a downlink SSB; or
a downlink PRS.

In some examples, as illustrated in FIG. 9, the apparatus may further include a determining module 820.

The determining module 820 is configured to determine, based on a specified trigger condition, whether to send the first indication message to the network device. The specified trigger condition is one of following conditions that: the MPE is exceeded, an uplink interference is greater than a first specified value, a remaining power is less than a second specified value, parameters of different antenna panels are different, a communication transmission is performed with multiple transmission and reception points in the network device.

In some examples, the sending module 810 is further configured to send the first indication message to the network device based on a current uplink resource.

In some examples, the sending module 810 is further configured to send a resource request to the network device.

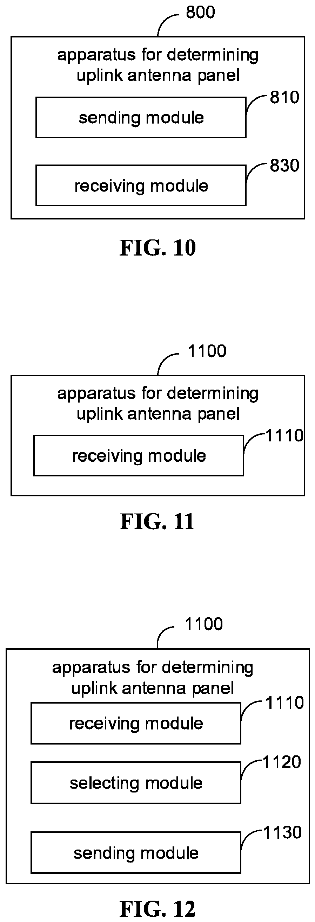

As illustrated in FIG. 10, the apparatus may further include: a receiving module 830 configured to receive an indication message returned by the network device.

The sending module 810 is further configured to send the first indication message to the network device based on an uplink resource indicated by the indication message.

In some examples, the resource request is a scheduling request or a random access request.

In some examples, the first indication message is one of following:
an uplink power reporting signaling for sending power value(s) of at least one uplink antenna panel or power value(s) of at least one uplink beam of the UE;
a beam measurement result reporting signaling for sending uplink power value(s) and/or measurement value(s) of at least one uplink beam of the UE;
a CSI measurement result reporting signaling corresponding to at least one uplink antenna panel or at least one uplink beam of the UE;
an antenna panel capability reporting signaling for sending the number of uplink antenna panels of the UE, the number of ports supported by each uplink antenna panel, and/or the number of beams supported by each uplink antenna panel;
a scheduling request, wherein a beam used by the scheduling request is a beam corresponding to at least one uplink antenna panel of the UE; or
a random access request message, wherein a beam used by the random access request message for sending a preamble is a beam corresponding to at least one uplink antenna panel of the UE.

In some examples, the receiving module 830 is further configured to receive a second indication message sent by the network device. The second indication message is configured to indicate to the UE an uplink antenna panel and/or an uplink beam selected based on the first indication message by the network device for the UE.

It is understandable that the above descriptions of the embodiments of the method for determining an uplink antenna panel as illustrated FIG. 1 to FIG. 5 are also applicable to the apparatus for determining an uplink antenna panel in this embodiment, which will not be repeated here.

With the apparatus for determining an uplink antenna panel according to embodiments of the disclosure, the first indication message is sent to the network device. The first indication message is configured to indicate the state(s) of the at least one uplink antenna panel and/or the state(s) of the at least one uplink beam of the UE. The network device can determine an uplink antenna panel and/or an uplink beam used by the UE or select an uplink antenna panel and/or an uplink beam for the UE based on the first indication message. The uplink throughput of the UE is improved.

FIG. 11 is a schematic block diagram illustrating another apparatus for determining an uplink antenna panel according to an embodiment of the disclosure. The device is applied to a network device. As illustrated in FIG. 11, the apparatus 1100 includes a receiving module 1110.

The receiving module 1110 is configured to receive a first indication message sent by a UE. The first indication message is configured to indicate state(s) of at least one uplink antenna panel and/or state(s) of at least one uplink beam of the UE.

In some embodiments, the first indication message includes at least one of following information:
a specified trigger condition;
a first specified type of uplink antenna panel identifier(s);
a first specified type of uplink beam identifier(s);
a second specified type of uplink antenna panel identifier(s);
a second specified type of uplink beam identifier(s);
a respective measurement value corresponding to each uplink antenna panel identifier;
a respective parameter corresponding to each uplink antenna panel identifier;
a respective measurement value corresponding to each uplink beam identifier; or
a respective parameter corresponding to each uplink beam identifier.

In some examples, the uplink antenna panel identifier or the uplink beam identifier is at least one of following identifiers: a specified identifier, an identifier of a corresponding reference signal set, or an identifier of a corresponding reference signal.

In some examples, the specified identifier is at least one of following identifiers: an antenna panel identifier, a TCI state identifier, or a spatial relationship information identifier.

In some examples, the reference signal is one of following signals:
an uplink SRS;
a downlink CSI-RS;
a downlink SSB; or
a downlink PRS.

In some examples, the specified trigger condition includes one of following conditions that: an MPE is exceeded, an uplink interference is greater than a first specified value, a remaining power is less than a second specified value, parameters of different antenna panels are different, or a communication transmission is performed with multiple transmission and reception points in the network device.

In some examples, the first indication message is one of:
an uplink power reporting signaling for sending power value(s) of the at least one uplink antenna panel or power value(s) of the at least one uplink beam of the UE;
a beam measurement result reporting signaling for sending uplink power value(s) and/or measurement value(s) of the at least one uplink beam of the UE;
a CSI measurement result reporting signaling corresponding to the at least one uplink antenna panel or the at least one uplink beam of the UE;
an antenna panel capability reporting signaling for sending the number of uplink antenna panels of the UE, the number of ports supported by each uplink antenna panel, and/or the number of beams supported by each uplink antenna panel;
a scheduling request, wherein a beam used by the scheduling request is a beam corresponding to the at least one uplink antenna panel in the UE; or
a physical random access channel random access request message, wherein a beam used by the random access request message for sending a preamble is a beam corresponding to the at least one uplink antenna panel of the UE.

In some examples, as illustrated in FIG. 12, the apparatus may further include a selecting module 1120 and a sending module 1130.

The selecting module 1120 is configured to select a current uplink antenna panel and/or a current uplink beam for the UE based on the first indication message;

The sending module 1130 is configured to send a second indication message to the UE. The second indication message is configured to indicate to the UE an uplink antenna panel and/or an uplink beam selected by the network device for the UE.

It is understandable that the above descriptions of the embodiments of the method for determining an uplink antenna panel as illustrated in FIG. 6 to FIG. 7 are also applicable to the apparatus for determining an uplink antenna panel in this embodiment, which will not be repeated here.

With the apparatus for determining an uplink antenna panel according to embodiments of the disclosure, by receiving the first indication message sent by the UE, the network device can know, based on the received first indication message, the uplink antenna panel and/or the uplink beam selected by the UE or may select an uplink antenna panel and/or an uplink beam for the UE based on the first indication message.

In order to realize the above embodiments, the disclosure also provides a communication device.

The communication device according to embodiments of the disclosure includes: a transceiver; a memory; and a processor connected to the transceiver and the memory. The processor is configured to control wireless signal transmission and reception of the transceiver and perform a method for determining an uplink antenna panel performed by the UE according to the above-mentioned embodiments by executing computer-executable instructions stored on the memory.

The communication device may be the aforementioned UE.

The processor may include various types of storage media which are non-transitory computer storage media. The processor may be connected to the memory through a bus or the like, for reading the executable program, for example as illustrated in at least one of FIGS. 1 to 5, stored on the memory.

In order to realize the above embodiments, the disclosure also provides a communication device.

The communication device according to embodiments of the disclosure includes: a transceiver; a memory; and a processor connected to the transceiver and the memory. The processor is configured to control wireless signal transmission and reception of the transceiver and perform a method for determining an uplink antenna panel performed by the network device according to the above-mentioned embodiments by executing computer-executable instructions stored on the memory.

The communication device may be the aforementioned network device.

The processor may include various types of storage media which are non-transitory computer storage media. The processor may be connected to the memory through a bus or the like, for reading the executable program, for example as illustrated in at least one of FIGS. 6 and 7, stored on the memory.

In order to realize the above embodiments, the disclosure also provides a computer storage medium.

The computer storage medium according to embodiment of the disclosure has an executable program stored thereon. After the executable program is executed by a processor, the foregoing method for example as illustrated in at least one of FIG. 1 to FIG. 5 can be performed.

In order to realize the above embodiments, the disclosure also provides a computer storage medium.

The computer storage medium according to embodiment of the disclosure has an executable program stored thereon. After the executable program is executed by a processor, the foregoing method for example as illustrated in at least one of FIG. 6 and FIG. 7 can be performed.

In order to implement the above embodiments, the disclosure also provides a system for determining an uplink antenna panel.

The system for determining an uplink antenna panel according to embodiments of the disclosure includes a UE and a network device. The UE can perform the methods for determining an uplink antenna panel as illustrated in FIG. 1 to FIG. 5, and the network device can perform the methods for determining an uplink antenna panel as illustrated in FIGS. 6 and FIG. 7.

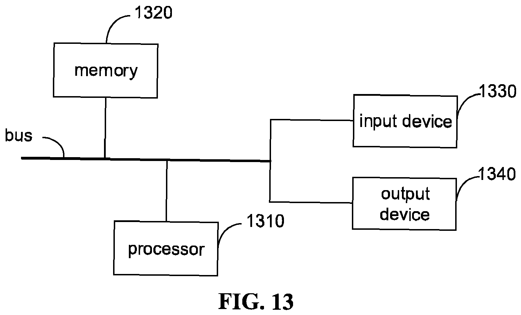

FIG. 13 is a schematic block diagram illustrating an example communication device for implementing embodiments of the disclosure. The communication device is intended to represent various forms of digital computers, such as laptop computers, desktop computers, workstations, personal digital assistants, servers, blade servers, mainframe computers, and other suitable computers. The communication device may also represent various forms of mobile devices, such as personal digital processors, cellular phones, smart phones, wearable devices, and other similar computing devices. The components, their connections and relationships, and their functions shown therein are by way of example only, and are not intended to limit implementations of the disclosure described and/or claimed herein.

As illustrated in FIG. 13, the communication device includes: one or more processors 1310, a memory 1320, and interfaces for connecting various components, including high-speed interfaces and low-speed interfaces. The various components are interconnected using different buses and may be mounted on a common motherboard or otherwise as desired. The processor may process instructions executed within the communication device, including instructions stored in or on memory to display graphical information of the Graphical User Interface (GUI) on an external input/output device, such as a display device coupled to the interfaces. In some examples, multiple processors and/or multiple buses may be used with multiple memories and multiple memories, if desired. Likewise, multiple communication devices may be connected, with each device providing some of the necessary operations (e.g., as a server array, a group of blade servers, or a multiprocessor system). A processor 1310 is taken as an example in FIG. 13.

The memory 1320 is the non-transitory computer-readable storage medium according to embodiments of the disclosure. The memory has instructions executable by at least one processor stored thereon, such that the at least one processor executes the methods for determining an uplink antenna panel according to the disclosure. The non-transitory computer-readable storage medium according to the disclosure has computer instructions stored thereon. The computer instructions causes the computer to execute the methods for determining an uplink antenna panel according to the disclosure.

As a non-transitory computer-readable storage medium, the memory 1320 can be used to store non-transitory software programs, non-transitory computer-executable programs and modules, such as program instructions/modules (e.g., the sending module 810 illustrated in FIG. 8 or the receiving module 1110 illustrated in FIG. 11). The processor 1310 is configured to execute various functional applications and data processing of the server (i.e., perform the methods for determining the uplink antenna panel of the above method embodiments) by running the non-transitory software programs, instructions and modules stored in the memory 1320.

The memory 1320 may include a storage program area and a storage data area, wherein the storage program area may store an operating system, application programs required for at least one function; while the storage data area may store data created according to the use of the positioning communication device. Additionally, the memory 1320 may include high-speed random access memory or non-transitory memory, such as at least one magnetic disk storage device, flash memory device, or other non-transitory solid state storage device. In some examples, the memory 1320 may include memories located remotely from the processor 1310, and these remote memories may be connected to the positioning communication device via a network. Examples of such networks include, but are not limited to, the Internet, an intranet, a local area network, a mobile communication network, or combinations thereof.

The communication device for determining the uplink antenna panel may further include: an input device 1330 and an output device 1340. The processor 1310, the memory 1320, the input device 1330, and the output device 1340 may be connected by a bus or in other ways, and the connection by a bus is taken as an example in FIG. 13.

The input device 1330 may receive inputted numerical or character information and generate key signal input related to user settings and functional control of the positioning communication device. For example, the input device 1330 is a touch screen, a keypad, a mouse, a trackpad, a touchpad, a pointing stick, one or more mouse buttons, a trackball, a joystick, etc. The output device 1340 may include a display device, auxiliary lighting devices (e.g., light emitting diodes (LEDs)), haptic feedback devices (e.g., vibration motors), and the like. The display device may include, but is not limited to, a liquid crystal display (LCD), a LED display, and a plasma display. In some examples, the display device may be a touch screen.

Various implementations of the systems and techniques described herein can be implemented in digital electronic circuitry, integrated circuit systems, application specific integrated circuits (ASICs), computer hardware, firmware, software, and/or combinations thereof. These various implementations may include being implemented in one or more computer programs executable and/or interpretable on a programmable system including at least one programmable processor. The programmable processor may be a special-purpose programmable processor or a general-purpose programmable processor and may receive data and instructions from a storage system, at least one input device, and at least one output device, and transmit data and instructions to the storage system, the at least one input device, and the at least one output device.

These computation programs (also referred to as programs, software, software applications, or codes) include machine instructions for programmable processors, and may be implemented using high-level procedural and/or object-oriented programming languages, and/or assembly/machine languages calculation program. As used herein, the terms "machine-readable medium" and "computer-readable medium" refer to any computer program product, device, and/or apparatus (such as magnetic disks, optical disks, memories, programmable logic devices (PLDs)) for providing machine instructions and/or data to a programmable processor, including machine-readable media that receive machine instructions as machine-readable signals. The term "machine-readable signal" refers to any signal used to provide machine instructions and/or data to a programmable processor.

To provide interaction with a user, the systems and techniques described herein may be implemented on a computer having a display device (such as a cathode ray tube (CRT) or LCD monitor) for displaying information to the user, a keyboard and a pointing device (such as, a mouse or a trackball) through which the user can provide input to the computer. Other kinds of devices can also be used to provide interaction with the user. For example, the feedback provided to the user can be any form of sensory feedback (such as visual feedback, auditory feedback, or tactile feedback). The input from the user can be received in any form, including an acoustic input, a voice input, or a tactile input.

The systems and techniques described herein may be implemented on a computing system including back-end components (e.g., as a data server), a computing system including middleware components (e.g., an application server), a computing system including front-end components (e.g., a user computer having a graphical user interface or web browser through which the user may interact with implementations of the systems and techniques described herein), or a computing system including any combination of such backend component, such middleware component and such front-end component. The components of the system may be interconnected by any form or medium of digital data communication (e.g., a communication network). Examples of the communication network include: Local Area Networks (LANs), Wide Area Networks (WANs), and the Internet.

A computer system can include clients and servers. Clients and servers are generally remote from each other and usually interact through a communication network. The relationship of client and server arises by computer programs running on the respective computers and having a client-server relationship to each other.

It is understandable that steps may be reordered, added or deleted using the various forms of flow shown above. For example, the steps described in the disclosure can be executed in parallel, sequentially or in different orders, and as long as the desired results of the technical solutions according to the disclosure can be achieved, no limitation is imposed herein.

The above-mentioned specific embodiments do not constitute a limitation on the protection scope of the disclosure. It is understandable by those skilled in the art that various modifications, combinations, sub-combinations and substitutions may be made to the method steps, devices or device units in the disclosed methods, apparatus and devices embodiments depending on design requirements and other factors. Any modifications, equivalent replacements, and improvements made within the spirit and principles of the disclosure should be included within the protection scope of the disclosure.

## Claims

1. A method for determining an uplink antenna panel, performed by a user equipment (UE), the method comprising:
sending a first indication message to a network device, wherein the first indication message is configured to indicate a state of at least one uplink antenna panel and/or a state of at least one uplink beam of the UE.

2. The method of claim 1, wherein the first indication message includes at least one of:
a specified trigger condition;
a first specified type of uplink antenna panel identifier;
a first specified type of uplink beam identifier;
a second specified type of uplink antenna panel identifier;
a second specified type of uplink beam identifier;
a respective measurement value corresponding to each uplink antenna panel identifier;
a respective parameter corresponding to each uplink antenna panel identifier;
a respective measurement value corresponding to each uplink beam identifier; or
a respective parameter corresponding to each uplink beam identifier.

3. The method of claim 2, wherein an uplink antenna panel identifier or an uplink beam identifier is at least one of: a specified identifier, an identifier of a corresponding reference signal set, or an identifier of a corresponding reference signal.

4. The method of claim 3, wherein the specified identifier is at least one of: an antenna panel identifier, a transmission configuration indication (TCI) state identifier, and a spatial relationship information identifier.

5. The method of claim 3, wherein the reference signal is one of:
an uplink sounding reference signal (SRS);
a downlink channel state information reference signal (CSI-RS);
a downlink synchronization signal block (SSB); or
a downlink positioning reference signal (PRS).

6. The method of claim 1, further comprising:
determining, based on a specified trigger condition, whether to send the first indication information to the network device;
wherein the specified trigger condition is one of following conditions that: a maximum permissible exposure (MPE) is exceeded, an uplink interference is greater than a first specified value, a remaining power is less than a second specified value, parameters of different antenna panels are different, and a communication transmission is performed with multiple transmission and reception points in the network device.

7. The method of any one of claims 1 to 6, further comprising:
sending the first indication message to the network device based on a current uplink resource.

8. The method of any one of claims 1 to 6, further comprising:
sending a resource request to the network device;
receiving an indication message returned by the network device;
sending the first indication message to the network device based on an uplink resource indicated by the indication message.

9. The method of claim 8, wherein the resource request is a scheduling request or a random access request.

10. The method of any one of claims 1 to 6, wherein the first indication message is one of:
an uplink power reporting signaling for sending a power value of the at least one uplink antenna panel or the at least one uplink beam of the UE;
a beam measurement result reporting signaling for sending an uplink power value and/or a measurement value of the at least one uplink beam of the UE;
a channel state information (CSI) measurement result reporting signaling corresponding to the at least one uplink antenna panel or the at least one uplink beam of the UE;
an antenna panel capability reporting signaling for sending a number of uplink antenna panels of the UE, a number of ports supported by each uplink antenna panel, and/or a number of beams supported by each uplink antenna panel;
a scheduling request, wherein a beam used by the scheduling request is a beam corresponding to the at least one uplink antenna panel of the UE; or,
a random access request message, wherein a beam used by the random access request message for sending a preamble is a beam corresponding to the at least one uplink antenna panel of the UE.

11. The method of any one of claims 1 to 10, further comprising:
receiving a second indication message sent by the network device, wherein the second indication message is configured to indicate to the UE an uplink antenna panel and/or an uplink beam selected, based on the first indication message, by the network device for the UE.

12. A method for determining an uplink antenna panel, performed by a network device, the method comprising:
receiving a first indication message sent by a user equipment (UE), wherein the first indication message is configured to indicate a state of at least one uplink antenna panel and/or a state of at least one uplink beam of the UE.

13. The method of claim 12, wherein the first indication message includes at least one of:
a specified trigger condition;
a first specified type of uplink antenna panel identifier;
a first specified type of uplink beam identifier;
a second specified type of uplink antenna panel identifier;
a second specified type of uplink beam identifier;
a respective measurement value corresponding to each uplink antenna panel identifier;
a respective parameter corresponding to each uplink antenna panel identifier;
a respective measurement value corresponding to each uplink beam identifier; or
a respective parameter corresponding to each uplink beam identifier.

14. The method of claim 13, wherein an uplink antenna panel identifier or an uplink beam identifier is at least one of: a specified identifier, an identifier of a corresponding reference signal set, or an identifier of a corresponding reference signal.

15. The method of claim 14, wherein the specified identifier is at least one of: an antenna panel identifier, a transmission configuration indication (TCI) state identifier, and a spatial relationship information identifier.

16. The method of claim 14, wherein the reference signal is one of:
an uplink sounding reference signal (SRS);
a downlink channel state information reference signal (CSI-RS);
a downlink synchronization signal block (SSB); or
a downlink positioning reference signal (PRS).

17. The method of claim 13, wherein the specified trigger condition is one of following conditions that: a maximum permissible exposure (MPE) is exceeded, an uplink interference is greater than a first specified value, a remaining power is less than a second specified value, parameters of different antenna panels are different, and a communication transmission is performed with multiple transmission and reception points in the network device.

18. The method of any one of claims 12 to 17, wherein the first indication message is one of:
an uplink power reporting signaling for sending a power value of the at least one uplink antenna panel or the at least one uplink beam of the UE;
a beam measurement result reporting signaling for sending an uplink power value and/or a measurement value of the at least one uplink beam of the UE;
a channel state information (CSI) measurement result reporting signaling corresponding to the at least one uplink antenna panel or the at least one uplink beam of the UE;
an antenna panel capability reporting signaling for sending a number of uplink antenna panels of the UE, a number of ports supported by each uplink antenna panel, and/or a number of beams supported by each uplink antenna panel;
a scheduling request, wherein a beam used by the scheduling request is a beam corresponding to the at least one uplink antenna panel of the UE; or,
a random access request message, wherein a beam used by the random access request message for sending a preamble is a beam corresponding to the at least one uplink antenna panel of the UE.

19. The method of any one of claims 12 to 18, further comprising:
selecting a current uplink antenna panel for the UE based on the first indication message; and
sending a second indication message to the UE, wherein the second indication message is configured to indicate to the UE an uplink antenna panel and/or an uplink beam selected, based on the first indication message, by the network device for the UE.

20. An apparatus for determining an uplink antenna panel, applied to a user equipment (UE), the apparatus comprising:
a sending module, configured to send a first indication message to a network device, wherein the first indication message is configured to indicate a state of at least one uplink antenna panel and/or a state of at least one uplink beam of the UE.

21. The apparatus of claim 20, wherein the first indication message includes at least one of:
a specified trigger condition;
a first specified type of uplink antenna panel identifier;
a first specified type of uplink beam identifier;
a second specified type of uplink antenna panel identifier;
a second specified type of uplink beam identifier;
a respective measurement value corresponding to each uplink antenna panel identifier;
a respective parameter corresponding to each uplink antenna panel identifier;
a respective measurement value corresponding to each uplink beam identifier; or
a respective parameter corresponding to each uplink beam identifier.

22. The apparatus of claim 21, wherein an uplink antenna panel identifier or an uplink beam identifier is at least one of: a specified identifier, an identifier of a corresponding reference signal set, or an identifier of a corresponding reference signal.

23. The apparatus of claim 22, wherein the specified identifier is at least one of: an antenna panel identifier, a transmission configuration indication (TCI) state identifier, and a spatial relationship information identifier.

24. The apparatus of claim 22, wherein the reference signal is one of:
an uplink sounding reference signal (SRS);
a downlink channel state information reference signal (CSI-RS);
a downlink synchronization signal block (SSB); or
a downlink positioning reference signal (PRS).

25. The apparatus of claim 20, further comprising:
a determining module, configured to determine, based on a specified trigger condition, whether to send the first indication information to the network device;
wherein the specified trigger condition is one of following conditions that: a maximum permissible exposure (MPE) is exceeded, an uplink interference is greater than a first specified value, a remaining power is less than a second specified value, parameters of different antenna panels are different, and a communication transmission is performed with multiple transmission and reception points in the network device.

26. The apparatus of any one of claims 20 to 25, wherein the sending module is further configured to send the first indication message to the network device based on a current uplink resource.

27. The apparatus of any one of claims 20 to 25, wherein
the sending module is further configured to send a resource request to the network device;
the apparatus further comprises a receiving module configured to receive an indication message returned by the network device; and
the sending module is further configured to send the first indication message to the network device based on an uplink resource indicated by the indication message.

28. The apparatus of claim 27, wherein the resource request is a scheduling request or a random access request.

29. The apparatus of any one of claims 20 to 25, wherein the first indication message is one of:
an uplink power reporting signaling for sending a power value of the at least one uplink antenna panel or the at least one uplink beam of the UE;
a beam measurement result reporting signaling for sending an uplink power value and/or a measurement value of the at least one uplink beam of the UE;
a channel state information (CSI) measurement result reporting signaling corresponding to the at least one uplink antenna panel or the at least one uplink beam of the UE;
an antenna panel capability reporting signaling for sending a number of uplink antenna panels of the UE, a number of ports supported by each uplink antenna panel, and/or a number of beams supported by each uplink antenna panel;
a scheduling request, wherein a beam used by the scheduling request is a beam corresponding to the at least one uplink antenna panel of the UE; or,
a random access request message, wherein a beam used by the random access request message for sending a preamble is a beam corresponding to the at least one uplink antenna panel of the UE.

30. The apparatus of any one of claims 20 to 29, further comprising:
a second receiving module, configured to receive a second indication message sent by the network device, wherein the second indication message is configured to indicate to the UE an uplink antenna panel and/or an uplink beam selected, based on the first indication message, by the network device for the UE.

31. An apparatus for determining an uplink antenna panel, applied to a network device, the apparatus comprising:
a receiving module, configured to receive a first indication message sent by a user equipment (UE), wherein the first indication message is configured to indicate a states of at least one uplink antenna panel and/or a state of at least one uplink beam of the UE.

32. The apparatus of claim 31, wherein the first indication message includes at least one of:
a specified trigger condition;
a first specified type of uplink antenna panel identifier;
a first specified type of uplink beam identifier;
a second specified type of uplink antenna panel identifier;
a second specified type of uplink beam identifier;
a respective measurement value corresponding to each uplink antenna panel identifier;
a respective parameter corresponding to each uplink antenna panel identifier;
a respective measurement value corresponding to each uplink beam identifier; or
a respective parameter corresponding to each uplink beam identifier.

33. The apparatus of claim 32, wherein an uplink antenna panel identifier or an uplink beam identifier is at least one of: a specified identifier, an identifier of a corresponding reference signal set, or an identifier of a corresponding reference signal.

34. The apparatus of claim 33, wherein the specified identifier is at least one of: an antenna panel identifier, a transmission configuration indication (TCI) state identifier, and a spatial relationship information identifier.

35. The apparatus of claim 33, wherein the reference signal is one of:
an uplink sounding reference signal (SRS);
a downlink channel state information reference signal (CSI-RS);
a downlink synchronization signal block (SSB); or
a downlink positioning reference signal (PRS).

36. The apparatus of claim 32, wherein the specified trigger condition is one of following conditions that: a maximum permissible exposure (MPE) is exceeded, an uplink interference is greater than a first specified value, a remaining power is less than a second specified value, parameters of different antenna panels are different, and a communication transmission is performed with multiple transmission and reception points in the network device.

37. The apparatus of any one of claims 31 to 36, wherein the first indication message is one of:
an uplink power reporting signaling for sending a power value of the at least one uplink antenna panel or the at least one uplink beam of the UE;
a beam measurement result reporting signaling for sending an uplink power value and/or a measurement value of the at least one uplink beam of the UE;
a channel state information (CSI) measurement result reporting signaling corresponding to the at least one uplink antenna panel or the at least one uplink beam of the UE;
an antenna panel capability reporting signaling for sending a number of uplink antenna panels of the UE, a number of ports supported by each uplink antenna panel, and/or a number of beams supported by each uplink antenna panel;
a scheduling request, wherein a beam used by the scheduling request is a beam corresponding to the at least one uplink antenna panel of the UE; or,
a random access request message, wherein a beam used by the random access request message for sending a preamble is a beam corresponding to the at least one uplink antenna panel of the UE.

38. The apparatus of any one of claims 31 to 37, further comprising:
a selecting module, configured to select a current uplink antenna panel for the UE based on the first indication message; and
a sending module, configured to send a second indication message to the UE, wherein the second indication message is configured to indicate to the UE an uplink antenna panel and/or an uplink beam selected, based on the first indication message, by the network device for the UE.

39. A communication device, comprising: a transceiver; a memory; and a processor connected to the transceiver and the memory; wherein the processor is configured to control a wireless signal transmission and reception of the transceiver and perform a method of any one of claims 1 to 11 by executing computer-executable instructions stored on the memory.

40. A communication device, comprising: a transceiver; a memory; a processor connected to the transceiver and the memory; wherein the processor is configured to control a wireless signal transmission and reception of the transceiver and perform a method of any one of claims 12 to 19 by executing computer-executable instructions stored on the memory.

41. A computer storage medium, having computer-executable instructions stored thereon; wherein after the computer-executable instructions are executed by a processor, a method of any one of claims 1 to 11 is performed.

42. A computer storage medium, having computer-executable instructions stored thereon; wherein after the computer-executable instructions are executed by a processor, a method of any one of claims 12 to 19 is performed.
